# EUROPÄISCHE PATENTSCHRIFT

(11) **EP 3 809 013 B1**
(45) Veröffentlichungstag und Bekanntmachung des Hinweises auf die Patenterteilung: **20.04.2022**
(21) Anmeldenummer: 20165651.9
(22) Anmeldetag: 25.03.2020
(51) Int. Cl.: F16H 25/24, F16H 25/22

(54) **KUGELGEWINDETRIEB UND MONTAGEVERFAHREN**
BALL SCREW AND METHOD OF ASSEMBLY
VIS À BILLES ET PROCÉDÉ DE MONTAGE

(43) Veröffentlichungstag der Anmeldung: 21.04.2021
(73) Patentinhaber: SFS Group International AG, 9435 Heerbrugg (CH)
(72) Erfinder: Schädlich, André, 9465 Salez (CH); Sinz, Daniel, 6921 Kennelbach (AT)

(56) Entgegenhaltungen:
- DE-A1-102008 025 349
- DE-A1-102010 034 488
- DE-A1-102013 207 745
- DE-B3-102016 214 964

## Beschreibung

Die vorliegende Erfindung befasst sich mit einem Kugelgewindetrieb, insbesondere dem verbesserten und vereinfachten Aufbau der Kugelumlenkung bzw. Kugelrückführung eines Kugelgewindetriebes sowie einem zugehörigen Montageverfahren.

### TECHNISCHER HINTERGRUND

Als Kugelumlaufspindel oder auch Kugelgewindetrieb (KGT) wird üblicherweise ein Wälzschraubtrieb bezeichnet mit Kugeln als Wälzkörpern. Zu den Hauptbestandteilen eines KGT zählen eine Gewindespindel und eine diese Spindel umgreifende Spindelmutter. Zwischen diesen beiden Bauteilen laufen im Betrieb Kugeln um. Die Gewindezüge der Gewindespindel wie auch der Spindelmutter sind als Kugelrillen mit einem geeigneten Profil ausgebildet und komplementär so aufeinander abgestimmt, dass sie gemeinsam (im montierten Zustand) einen Kugelkanal bzw. eine Kugelführung bilden. Anders als bei einer Schraube-Mutter-Verbindung, bei der die Gewindeflanken flächig aufeinander gleiten, übernehmen beim KGT die umlaufenden Kugeln im Gewinde die Lastübertragung zwischen Mutter und Spindel. Die flächige Gleitbewegung wird also durch eine (Ab-)Rollbewegung ersetzt, was mit verringerter Reibung einhergeht.

Um einen geschlossenen Umlaufpfad für die Kugeln zu erhalten, werden Kugelumlenkungen eingesetzt. Diese haben die Aufgabe, die Kugeln an einer ersten Stelle aus der Kugelführung zwischen Spindelmutter und Gewindespindel herauszuheben und an einer zweiten Stelle wieder zuzuführen. Die Kugelrückführung stellt also einen Bypass dar, der eine oder mehrere Gewindezüge des Mutter-Spindelsystems überbrückt und damit einen geschlossenen Umlaufpfad für die Kugeln eines KGT bildet. In der Regel werden die Kugeln in der Spindelmutter radial nach aussen aus der Kugelrille ausgehoben und innerhalb oder ausserhalb der Spindelmutter in einem Kanal oder einem Rohr (Umlenkkanal) geführt, bevor sie an der dafür vorgesehenen Stelle wieder in den Kugelkanal zwischen Gewindespindel und Spindelmutter eingesetzt werden.

Technisch gesehen funktioniert ein KGT als Schraubgetriebe, das eine Drehbewegung in eine Längsbewegung umsetzen kann, wobei die Unter- bzw. Übersetzung durch die Dimensionierung der Gewindespindel und die Steigung des Gewindes bestimmt wird.

Kugelgewindetriebe werden in vielen technischen Anwendungen eingesetzt, vor allem im Maschinenbau und dort bevorzugt in Werkzeugmaschinen. Zunehmend kommen KGT aber auch als Längsantriebe in Bereichen zum Einsatz, wo bisher Hydraulik- oder Pneumatiksysteme Verwendung fanden, z.B. in Pressen, Spritzgiessmaschinen und Servolenkungen. Zudem spielen KGT auch eine zunehmende Rolle in elektromechanischen und elektro-hydraulischen Bremssystemen, wo KGT als Ersatz für hydraulische Bremszylinder oder parallel zu bekannten Bremssystemen bei Bremsassistenzsystemen eingesetzt werden.

Kugelgewindetriebe können im Grundsatz auf zwei Arten betrieben werden. Wird die Spindelmutter ortsfest, aber drehbar gelagert, die Gewindespindel jedoch drehfest, aber längsverschieblich gelagert, so bewegt sich die Gewindespindel entlang ihrer Längsachse, sobald die Mutter angetrieben wird. Im zweiten Fall wird die Gewindespindel ortsfest, aber drehbar gelagert und die Spindelmutter längsbeweglich drehfest gelagert. Dies führt bei angetriebener Gewindespindel zu einer Linearbewegung der Spindelmutter entlang der Gewindespindel.

Die Erfindung befasst sich mit einer Verbesserung und Vereinfachung der Kugelumlenkung. Mit Umlenkung wird im Folgenden speziell das Bauteil gemeint, das für das Herausheben aus dem Kanal zwischen Gewindespindel und Gewindemutter wie auch für die Führung in den Umlenkkanal zuständig ist. Dieses Bauteil ist aus mehreren Gründen funktionskritisch und herstelltechnisch anspruchsvoll: In einem KGT werden üblicherweise so viele Kugeln eingesetzt, dass stets eine gleichmässige Lastübertragung zwischen Gewindespindel und Spindelmutter über die Länge des KGT gewährleistet ist. Gleichzeitig müssen die Kugeln aber genügend Spiel untereinander haben, um ein Verklemmen insbesondere in der Kugelumlenkung zu verhindern. Wenn die Kugeln durch die Kugelumlenkung aus dem Kugelkanal herausgehoben werden, erfahren sie eine komplexe Richtungsänderung nacheinander in verschiedene Raumrichtungen. Die Umlenkung muss also in der Lage sein, die Kräfte der Kugeln zu kompensieren, wenn sie diese Richtungsänderungen erfahren. Das sind zum einen die Kräfte, die freiwerden, wenn die Kugeln entlastet werden (aus dem Kanal zwischen Gewindespindel und Spindelmutter) wie auch durch den mehrfachen Richtungswechsel in den Umlenkkanal selber.

Je nach Antriebsrichtung des KGT wird dabei jede Umlenkung abwechselnd zum Ausheben aus wie zum Einführen in den Kugelkanal genutzt und muss daher beide Funktionen sicher erfüllen können. Nicht zuletzt ist die Kugelumlenkung eine wesentliche Quelle für das Betriebsgeräusch eines KGT.

### STAND DER TECHNIK

Üblicherweise werden Kugelumlenkungen hergestellt, indem an geeigneter Stelle im Körper der Spindelmutter eine geeignete (radiale, tangentiale oder axiale) Bohrung, Durchbohrung bzw. Ausfräsung hergestellt wird, die zentral in eine Kugelrille des Innengewindes mündet. In dieser Öffnung wird ein Umlenkelement befestigt, das häufig zungen- oder schaufelförmig geformt ist, um das Ausheben der Kugeln aus dem Kugelkanal zu erleichtern. Anschliessend werden die Kugeln radial nach aussen abgeleitet und entlang der KGT-Längsachse in Richtung der weiteren Umlenkvorrichtung geführt. Dies erfolgt entweder in röhren- oder grabenförmigen Umlenkkanälen, die auf oder in der Spindelmutterwand angelegt werden. Ein weiteres Umlenkelement leitet die Kugeln dann zurück in den Kugelkanal.

Aus Gründen der rationellen industriellen Fertigung, der Betriebssicherheit und zur Verringerung des Montageaufwandes ist es einleuchtend, hierfür möglichst wenige diskrete Bauteile zu verwenden.

Nur beispielhaft für die zahlreichen Möglichkeiten, eine Kugelumlenkung zu realisieren sei an dieser Stelle EP 2 221 506 genannt. Sie beschreibt einen Umlenkkörper aus Kunststoff, der aus zwei miteinander zu verbindenden Hälften besteht, die gemeinsam einen Umlenkkanal bilden und mittels Rast- bzw. Klemmvorrichtungen zusammengehalten werden. Dieser Umlenkkanal ist als auf die Spindelmutter aufzusetzende Aussenumlenkung realisiert.

WO 2014/184154 beschreibt eine Kugelumlenkung, die zweiteilig aufgebaut ist. Ein radial innenliegendes Bauteil bildet zusammen mit einem radial aussenliegenden Bauteil einen Kanal für die Kugeln, wobei die beiden Bauteile von einer die Spindelmutter umgebende Hülse am Platz gehalten werden.

Die DE 10 2016 214 964 B3 zeigt einen Kugelgewindetrieb mit Spindelmutter und Gewindespindel, bei dem der endlose Umlaufkanal für die Kugeln realisiert wird durch zwei Umlenkungen zum Ein- bzw. Ausheben von Kugeln aus dem Kugelkanal zwischen Spindelmutter und Gewindespindel in einen Umlenkkanal. Die Umlenkungen werden von aussen nach radial innen in die Mantelfläche der Spindelmutter eingesetzt und versenkt. Diese Umlenkungen sind so gestaltet, dass sie sowohl zum Aus- wie zum Einheben der Kugeln aus dem Kugelkanal verwendbar sind.

Die Schrift DE 10 2010 034 488 A1 befasst sich mit einem Kugelgewindetrieb mit einer Gewindespindel und einer Spindelmutter. Es ist ein gemeinsames Umlenkelement vorgesehen, das für mehrere endlose Kugelkanäle Umlenkabschnitte bereitstellt.

Die Schrift DE 10 2013 207 745 A1 befasst sich ebenfalls mit einem Kugelgewindetrieb mit Spindelmutter, Gewindespindel und einem dazwischen liegenden Umlaufkanal für Kugeln. Ein einstückiges Umlenkelement zwischen zwei benachbarten Kugelkanälen ist in einer in der Spindelmutter ausgearbeiteten Tasche verankert.

Ein wesentlicher Kostentreiber wie auch eine potentielle Quelle für Montagefehler sind komplexe Aufbauten der Kugelumlenkungen. Eine deutliche Vereinfachung wird durch eine Kugelumlenkung gemäss EP 2 514 999 erzielt. Diese Schrift beschreibt eine einteilige bzw. einstückige Kugelumlenkung, die von aussen tangential in eine Öffnung in der Spindelmutter einsetzbar ist und die Umlenkung in einen parallel zur Spindelmutterachse angelegten Kanal bewerkstelligt.

Die Kugeln werden hierbei durch den Umlenkungskörper in einem rohrförmigen Abschnitt geleitet, was herstelltechnisch die Umlenkung als Spritzgussteil komplex werden lässt.

Aufgabe der vorliegenden Erfindung ist es daher, eine Umlenkung für die Kugelrückführung zu beschreiben mit einem Umlenkkanal und zwei an den Enden des Umlenkkanals anschliessenden Umlenkungen, wobei die Umlenkungen eine vereinfachte Bauweise aufweisen.

### BESCHREIBUNG DER ERFINDUNG

Die vorliegende Erfindung verbessert die Kugelrückführung eines Kugelgewindetriebes im Vergleich zum Stand der Technik. Eine Kugelrückführung umfasst hierbei einen Umlenkkanal (in bzw. an der Spindelmutter) und zwei baugleiche Umlenkungen. Deren Funktion wiederum ist das Ein- bzw. Ausheben von Kugeln aus dem Kugelkanal zwischen der Spindelmutter und der Gewindespindel des Kugelgewindetriebes sowie die Führung in den Umlenckanal. Die beiden Umlenkungen sind einstückig ausgeführt. Baugleich bedeutet, dass sie (bis auf Serienschwankungen bei der Fertigung) identisch hergestellt wurden, dieselbe Kontur besitzen und insbesondere nicht z.B. als spiegelsymmetrische Teile gefertigt werden müssen. Verwechslungen bei der Montage sind daher ausgeschlossen.

Jede Umlenkung umfasst dabei im Wesentlichen 2 Funktionsbereiche bzw. -elemente:
(i). Ein Lageelement, welches ausgelegt ist die Einbauposition (also die (radiale) Einbautiefe, Orientierung in der Spindelmutter) der Umlenkung zu definieren. "Radial" ist hierbei rechtwinklig auf die Längsachse L des Kugelgewindetriebs bezogen. Das Lageelement ist dabei jene Einheit, die im verbauten / montierten Zustand aussen an der Mantelfläche der Spindelmutter angeordnet ist bzw. mit dieser bündig abschliesst. Sie wechselwirkt bevorzugt mit einer als Anschlagfläche bzw. Tiefenbegrenzung ausgeführten Kontur der Spindelmutter zusammen.
(ii). Ein Auslenkungselement mit einer schaufelförmigen Ausheberegion und einer Umlenkfläche für die Kugeln aus bzw. in den Kugelkanal. Die Kontur dieses Elements ist konstruktiv im weitesten Sinn mit einer Rinne vergleichbar; eine konkav gewölbte, weitgehend linienförmige, jedoch nur in Abschnitten geradlinig verlaufende Vertiefung. Alternativ kann sie als konkav gewölbte, kurvige Rampe beschrieben werden, welche die Kugeln aus der Kugelrinne in den Umlenkkanal (bzw. umgekehrt) leitet. Die Querwölbung wird so gewählt, dass sie die Kugeln zwar führt, aber sicher nicht klemmt. Der Radius der Rinnenwölbung wird also stets grösser sein als der Kugelradius. Der Radius im Querschnitt muss dabei nicht konstant sein - die Rinne kann also zum Rand hin flacher ausfallen als in der Mitte oder einen elliptischen Querschnitt haben. Die Rinne kann auch in Längsausdehnung (von der Ausheberegion über die Umlenkfläche zum Umlenkkanal) ebenso im Radius sich verändern. Wichtig ist hierbei, im Sinne der vereinfachten Herstellung, dass die Kugelumlenkung nach dieser Erfindung an keiner Stelle eine vollständig geschlossene Röhre bildet, somit keinen Tunnel bzw. Tunnelabschnitt aufweist. Diese Festlegung gilt dabei für eine Kugelumlenkung bzw. Umlenkung als unverbautes, nicht endmontiertes Element. Im verbauten Zustand werden Bereiche, Elemente bzw. Oberflächen der Spindelmutter bzw. einer auf die Spindelmutter übergeschobenen Abdeckhülse die nicht vollständig geschlossene Röhre zu Tunneln bzw. Tunnelabschnitten ergänzen, um die sichere Führung der Kugel im technischen Sinne einer Kugelrückführung zu gewährleisten.

Die Richtungsangaben in dieser Beschreibung des Auslenkungselements gelten, wegen der identischen Funktion als Ein- bzw. Aushebeelement, auch sinngemäss für die Anwendung beim Wiedereinführen in den Kugelkanal zwischen Spindelmutter und Gewindespindel.

Je nach Auslegung des KGT (Drehgeschwindigkeit, Kugelmasse, Umlenkwinkel) wird die Rinne so ausgelegt werden, dass die Geräuschentwicklung des KGT, die unter anderem dem Entlasten der Kugeln beim Ausheben aus dem Kugelkanal zuzuschreiben ist, gering gehalten wird. Die schaufelförmige Ausheberegion kann dazu so ausgelegt werden, dass sie Anprallflächen aufweist oder Bereiche hat, die flexibel die Bewegungsenergie der Kugeln beim Ausheben bzw. Entlasten aufnehmen kann. Das kann durch die Wahl des Werkstoffes ebenso bewirkt werden wie durch die Auslegung der Ausheberegion und Umlenkfläche. Das Lageelement wird also die radiale Einsetztiefe der Umlenkung begrenzen, und die Verdrehbarkeit im montierten Zustand in oder an der Spindelmutter verhindern. Damit wird gewährleistet, dass die Umlenkung über eine definierte Lage und Orientierung in der Spindelmutterausnehmung verfügt und seine Funktion erfüllen kann. In Konsequenz ist die Umlenkung so ausgelegt, dass sie radial von aussen in die Mantelfläche der Spindelmutter einsetzbar ist - und nicht z.B. von der Stirnseite der Spindelmutter her.

Das Lageelement weist bevorzugt eine im Wesentlichen zylindrische oder ovale Grundform auf, deren Höhe geringer ist als die Mantelstärke der Spindelmutter am Einbauort. Besonders bevorzugt werden das Lageelement wie auch das Auslenkungselement fliessend ineinander übergehen. Trotz der funktionellen Unterscheidbarkeit wird damit ein einteiliges / einstückiges Werkstück erzielt.

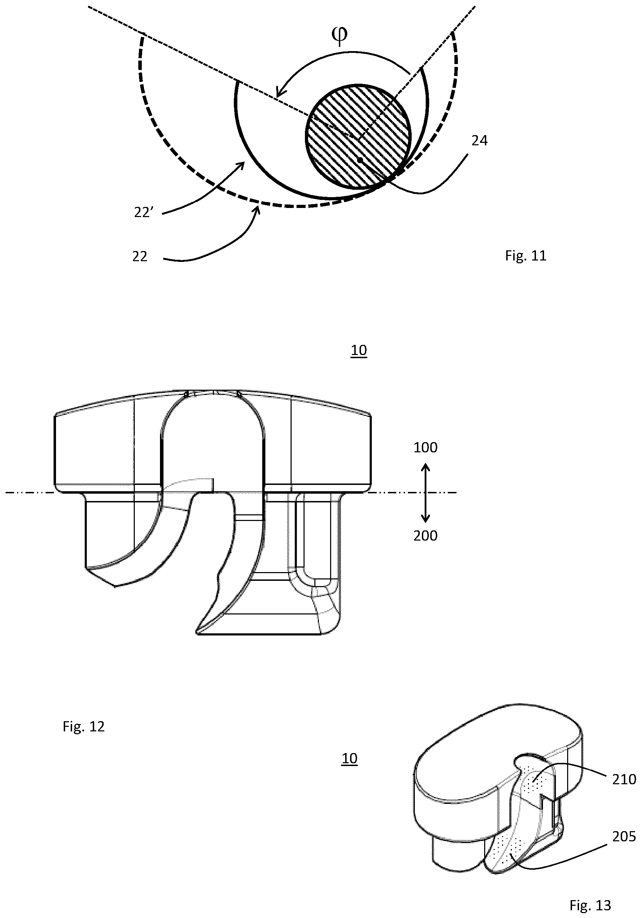

Ein weiteres wichtiges Merkmal ist, dass alle für die Führung von Kugeln vorgesehenen Flächen der Umlenkung als nicht geschlossene, nicht tunnelförmige Rinnen ausgelegt sind. Mit anderen Worten, die Umlenkung gemäss Erfindung enthält im nicht-verbauten Zustand keine geschlossenen Rohrabschnitte, die der Kugelführung dienen. Die konkav gewölbte, linienförmige Vertiefung, als die die Rinne beschrieben ist, kann zwar seitlich hochgezogene, die Kugelführung unterstützende Wände aufweisen, ist aber nicht ringförmig oder bogenförmig geschlossen; sie ist ein offener Kanal. Diese Öffnung lässt sich charakterisieren anhand des Öffnungswinkels φ , der bestimmt wird als der Winkel des Schnittpunkts zweier Geraden, die von den Rinnenrändern zur betriebsüblichen Lage einer Kugel im Kanal verlaufen, orientiert senkrecht zu ihrer Bewegungsrichtung, wobei der Schnittpunkt im Mittelpunkt der Kugel liegt (cf. Fig. 11). Der freie Öffnungswinkel wird mindestens 30°, bevorzugt 90° oder mehr aufweisen. Die obere Grenze für φ beträgt 180°. Diese Festlegung soll auch gelten, wenn die Kugel nur bei bestimmten Bewegungsvorgängen an solchen Abschnitten geführt wird.

Bevorzugt wird eine Umlenkung gemäss Erfindung als Spritzgiesswerkstück aus Kunststoff geformt. Je nach Auslegung und Anforderungsprofil wird man eine Kunststoffart wählen, die ausreichend mechanisch und thermisch standfest und elastisch ist, um die geforderte Lebensdauer zu erzielen. Entsprechende technische Kunststoffe und deren Eigenschaften sind bekannt.

Zwei baugleiche Umlenkungen bilden zusammen mit Elementen eines Kugelgewindetriebes eine Kugelrückführung. Ein Umlenkkanal kann dabei als ein in die Mantelfläche der Spindelmutter eingesenkter Trog oder Graben ausgeführt werden, an dessen Enden jeweils eine Umlenkung angeordnet ist. In einfachster Ausführung ist ein Umlenkkanal eine eingepresste oder eingefräste Vertiefung in der Spindelmutter, die ausgelegt ist, Kugeln aufzunehmen und zu führen. Die Umlenkungen werden von aussen in die Mantelfläche der Spindelmutter eingesetzt und zwar radial, also von aussen in Richtung der Zentralachse des Kugelgewindetriebs bzw. der Gewindespindel-Mittenlängsachse. Bevorzugt werden die Umlenkungen so ausgeführt, dass sie ausschliesslich radial eingesetzt werden können, also durch eine lineare Bewegung und nicht durch ein (zusätzliche) Dreh- und oder Schwenkbewegung. Dies erleichtert vor allem die automatisierte Montage. In der beschriebenen Ausführungsform wird der Umlenkkanal sowie die Umlenkung(en) bei der Montage durch eine die Spindelmutter bündig umschliessende Hülse verschlossen. Die Hülse schliesst also den Umlenkkanal nach oben bzw. (radial) nach aussen ab.

Alternativ zu einem als in die in die Mantelfläche der Spindelmutter eingesenkten Trog oder als Graben ausgeführter Umlenkkanal, kann die Kugelrückführung auch mit einem Umlenckanal realisiert werden, der als ein auf die Mantelfläche der Spindelmutter aufbauendes oder aufgesetztes, separates Bauteil ausgeführt ist. In diesem Fall kann, je nach Ausführung auf eine Hülse verzichtet werden und die Befestigung des Umlenkkanals, wie im Stand der Technik bekannt, durch Verschrauben, Klemmen, Einrasten erzielt werden.

Alternativ ist auch denkbar, dass die Umlenkkanäle selbst lediglich eingesetzt werden und durch den aufgesetzten Umlenkkanal gehalten werden.

Nachfolgend sollen die Verfahrens- bzw. Montageschritte zur Montage einer Kugelrückführung eines Kugelgewindetriebes beschrieben werden. Sie umfasst folgende Schritte:
- Das Bereitstellen von zwei einstückigen, baugleichen Umlenkungen wie oben beschrieben
- Das Bereitstellen einer vorassemblierten Baugruppe aus mindestens einer Spindelmutter und einer Gewindespindel, wobei die Spindelmutter zwei radial nach innen angelegte Durchbrüche aufweist. Deren Kontur ist so ausgeführt, dass sie die Umlenkungen aufnehmen kann. Die Durchbrüche werden durch einen Kugelkanal verbunden.
- Das Einsetzen der Umlenkungen in die Durchbrüche;
- Das Einbringen einer Mehrzahl von Kugeln in den Kugelgewindetrieb über den Kugelkanal bzw. eine der Umlenkungen;
- Das Sichern der Kugelrückführung durch Anbringen einer Abdeckhülse auf der Spindelmutter

### KURZBEZEICHNUNG DER FIGUREN

Figur 1 zeigt schematisch ein KGT nach Stand der Technik als Prinzipskizze.
Figur 2 zeigt eine Draufsicht auf eine Spindelmutter mit schematisch gezeigten Aussparungen für Umlenkungen und den Umlenkanal.
Figur 3 zeigt die 3 funktionellen Einheiten / Baugruppen einer Umlenkung gemäss Erfindung.
Figur 4a bis Fig. 4c zeihen eine explodierte Ansicht von Figur 3.
Figur 5 ist eine Draufsicht auf die funktionellen Baugruppen gemäss Erfindung.
Figur 6 ist eine perspektivische Ansicht auf die funktionellen Flächen einer Umlenkung.
Figur 7 zeigt eine Umlenkung im verbauten Zustand im Querschnitt durch die Kugelmutter.
Figur 8 zeigt die Schnittebene von Figur 7.
Figur 9 und 10 zeigen eine zweite Ausführungsform einer Umlenkung.
Figur 11 zeigt erläutert die Winkelbeziehung bei einer Rinne.Figur 12 und 13 zeigt eine dritte Ausführungsform der Erfindung in Seitenansicht und Schrägansicht.

### BESCHREIBUNG DER FIGUREN

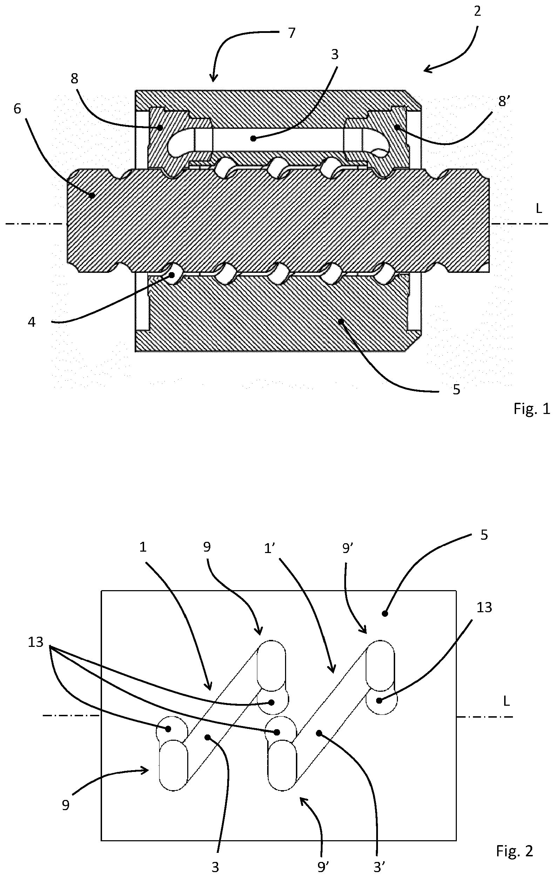

Figur 1 zeigt ein KGT 2 in einer Ausführung nach Stand der Technik. Es soll der Erläuterung der wichtigsten Bestandteile eines KGT dienen, wie sie auch in der vorliegenden Beschreibung immer wieder verwendet werden. Gezeigt ist ein KGT 2 im Längsschnitt entlang der Mittenachse L. Eine Gewindespindel 6 weist ein an die Geometrie der Kugeln des KGT 2 angepasstes Aussengewinde auf, ebenso wie das Innengewinde der Spindelmutter 5, die die Gewindespindel konzentrisch umgibt. Dadurch wird ein helixförmiger Kugelkanal 4 gebildet.

Eine Kugelrückführung wird im gezeigten Fall durch einen in der Spindelmutter 5 angelegten Umlenkkanal 3 gebildet. Die Umlenkung erfolgt durch zwei in den Stirnseiten der Spindelmutter 5 eingelassene Umlenkungen 8, 8'. Die Mantelfläche 7 der Spindelmutter 5 bleibt dadurch frei.

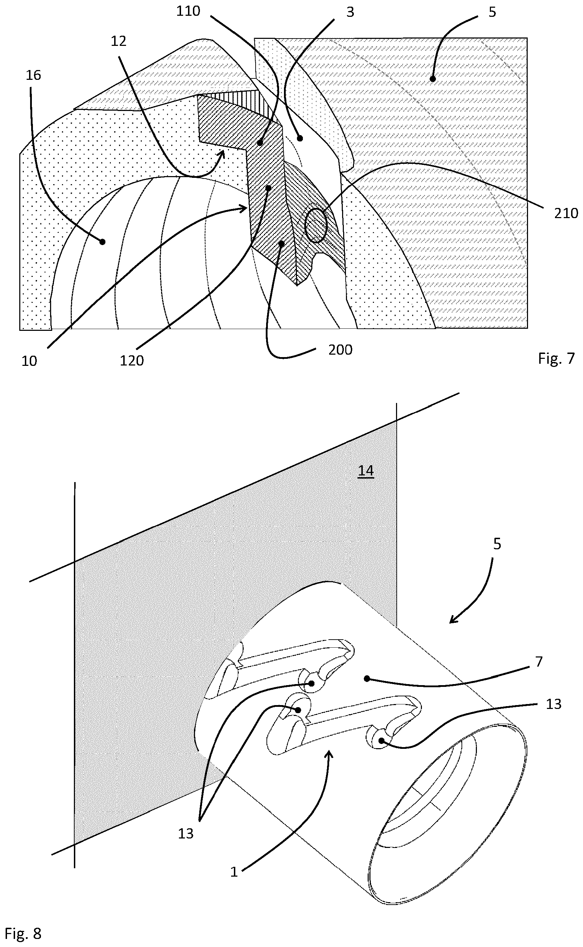

Figur 2 zeigt eine Draufsicht auf eine Spindelmutter 5 mit schematisch gezeigten Aussparungen 9, 9' für Umlenkungen und den Umlenkkanal 3, 3'. Eine perspektivische Variante zeigt Figur 8. In Figur 2 ist gezeigt, dass die Kugelrückführungen 1, 1' hier ausgebildet sind als in die Mantelfläche 7 eingearbeitete Vertiefungen für den Umlenkkanal 3, 3', der jeweils die vorbereiteten Vertiefungen 9, 9' für Umlenkungen. Die radial nach aussen offenen Kanäle bzw. Öffnungen werden abschliessend durch eine (hier nicht gezeigte) überschobene Hülse bzw. oder lokale Abdeckungen verschlossen. L bezeichnet wiederum die Mittenlängsachse.

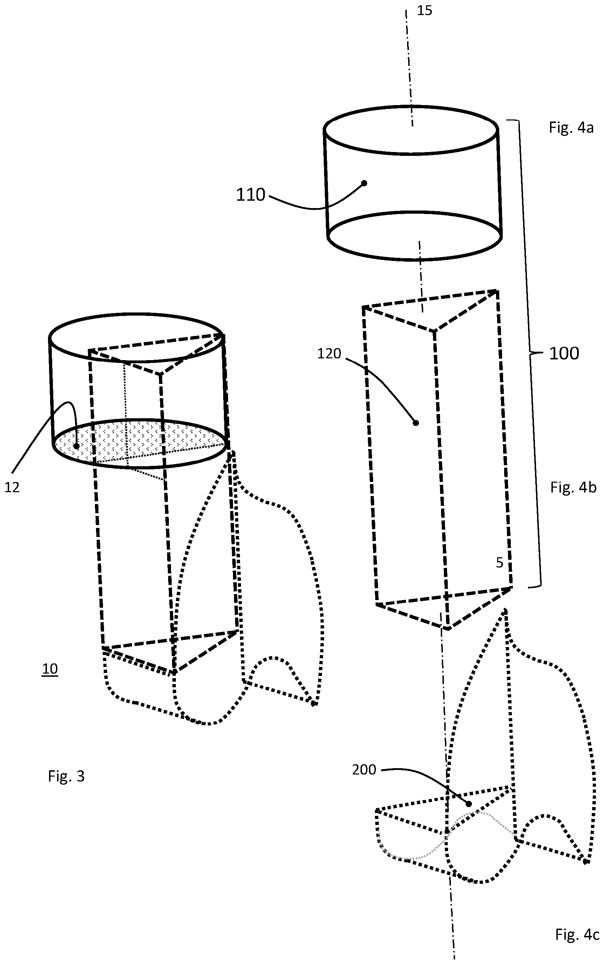

Figur 3 erläutert das in der vorliegenden Erfindung beschriebene Konzept einer funktionell zweiteiligen bzw. (funktionell) zwei-teilbaren Umlenkung 10. Die Betrachtung soll erfolgen zusammen mit den Figuren 4a bis 4c, die eine explodierte Ansicht zeigen. Die einstückige Umlenkung 10 ist angedeutet als ein Körper, dessen Regionen oder Volumenbereiche sich unterschiedlichen Aufgaben zuordnen lassen.

Das Lageelement 100, in der Zeichnung "oben" angeordnet, bildet im verbauten Zustand das Element an der obersten Position, sprich an oder in der Mantelfläche einer Spindelmutter. Die Einbaurichtung der Umlenkung 10 ist von aussen radial in Richtung auf die Längsachse L des Kugelgewindetriebs. Im gezeigten Fall dieser ersten Ausführungsform können beim Lageelement 100 noch ein Kopfteil 110 und ein Verbindungsstück 120 unterschieden werden. Der Kopfteil 110 kann hier idealisiert als Zylinder betrachtet werden mit einer flachen Unterseite 12, die mit einer als Anschlag bzw. Tiefenbegrenzung wirkenden entsprechenden Fläche 13 der Spindelmutter zusammenwirkt; in den Figuren 2 und 8 als Teil der Aussparung 9, 9' gezeigt. Die Ausbildung als zylindrischer Körper erlaubt es auf besonders einfache Weise die Gegenkontur in der Spindelmutter 5 durch Bohren oder Fräsen herzustellen. Durch eine solche Ausgestaltung kann auch in dickwandigen Spindelmuttern eine einfache und schlanke Umlenkung realisiert werden.

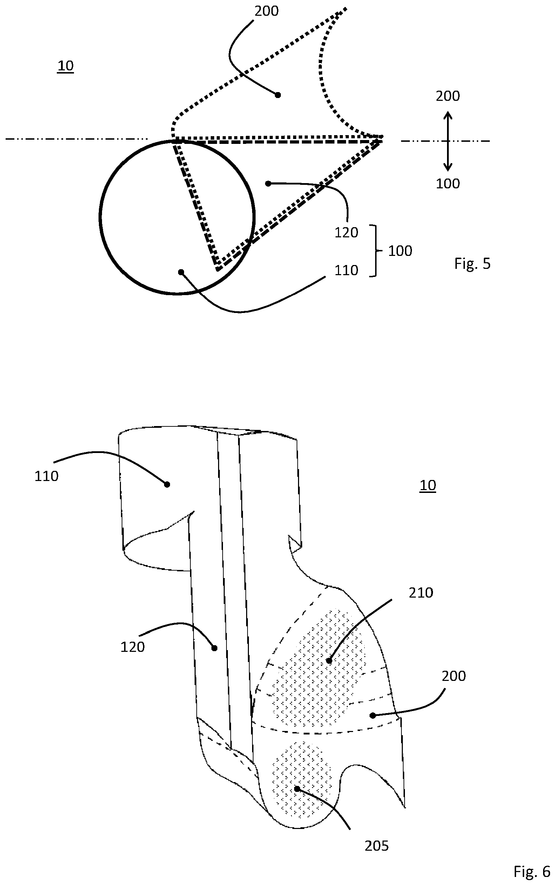

Als weiteres Funktionselement wird in Figur 3 sowie losgelöst in Figur 4c das Auslenkungselement 200 gezeigt. Es weist eine schaufelförmige Ausheberegion 205 und eine Umlenkfläche 210 für die Kugeln aus bzw. in einen Kugelkanal auf (Fig. 6). Das Auslenkungselement 200 greift mit seinen, in der Zeichnung unten dargestellten, S-förmigen Kontur in den Kugelkanal ein. Da Figur 6 ein besseres Verständnis des Auslenkungselementes 200 erlaubt, wird auf die Beschreibung dort verwiesen.

Das längsausgedehntes Verbindungsstück 120 verbindet das Lageelement 100 und das Auslenkungselement 200 miteinander und sorgt für Verdrehsicherheit. Durch eine vieleckige Ausgestaltung des Verbindungsstücks wird gewährleistet, dass die Auslenkung 10, insbesondere das Auslenkungselement 200 eine definierte Orientierung hat und sich im Betrieb, durch den Impuls der auftreffenden und umzulenkenden Kugeln, nicht verschiebt oder verdreht. Durch die gewählte Konstruktion kann die Umlenkung 10 ohne Rast- oder Klemmelemente auskommen. Die Soll-Einbauposition der Umlenkung 10 wird also im Wesentlichen durch das Lageelement 100 gewährleistet, in dieser Ausführungsform durch dessen Kopfteil 110 (Tiefenanschlag) und das Verbindungsstück 120 (Verdrehschutz).

Figur 5 zeigt eine Betrachtung einer Umlenkung 10 "von oben" d.h. ähnlich dem Draufblick im verbauten Zustand auf die Mantelfläche 7 in der Spindelmutter. Erkennbar ist die Überlagerung der vorbeschriebenen Funktionselemente in der Umlenkung 10. Es wurden dieselben Linienarten verwendet wie in Figur 3 und 4a-c.

Figur 6 zeigt eine Umlenkung 10 in perspektivischer Ansicht von der Seite, in der im Betrieb die Kugeln aus dem Kugelkanal zwischen Spindelmutter und Gewindespindel auf das Auslenkungselement 200 treffen. Die schaufelförmige Ausheberegion 205 taucht in den Kugelkanal ein und zwingt die Kugeln aus der helixförmigen Gewindebahn zunächst radial nach aussen (im Bild entsprechend "nach oben"). Die Umlenkfläche 210 sorgt dann dafür, dass die Kugeln in den Umlenkkanal 3 (Fig. 7) gelangen (in der Zeichnung nach rechts). Dieser Umlenkkanal kann exakt parallel zur Spindellängsachse verlaufen, kann aber auch einen Winkel mit ihm einschliessen, wie in den Figuren 2 und 8 gezeigt. Durch die baugleiche Auslegung der Umlenkungen 10 werden, wie bereits beschrieben, aus Ausheberegion 205 und Umlenkfläche 210, je nach Betriebsrichtung, natürlich auch die Funktionsflächen, die die Kugeln wieder in den Kugelkanal zurückführen

Figur 7 zeigt einen Querschnitt durch eine Spindelmutter 5 mit verbauter Umlenkung 10 entlang einer Querschnittsebene 14 (Figur 8). Die Lage / Anordnung von Lageelement 100 und Auslenkungselement 200 mit der Umlenkfläche 210 und dem Verbindungsstück 120 ist markiert. Gut erkennbar ist, wie die Umlenkfläche 210 in den Umlenkkanal 3 überführt und wie das Lageelement 100 dafür sorgt, dass die Position der Umlenkung 10 in der Spindelmutter 5 definiert ist. Die Gewindespindel ist in Fig. 7 weggelassen, schematisch sind die Rillen 16 des Innengewindes der Spindelmutter 5 angedeutet. Die Lage der Unterseite 12 des Lageelementes 100 ist durch einen Pfeil gekennzeichnet.

In Figur 8 wird eine Spindelmutter 5 gezeigt mit den Ausnehmungen in der Mantelfläche 7, die für die Kugelrückführung 1 Verwendung finden. 14 bezeichnet die Querschnittsebene aus Figur 7.

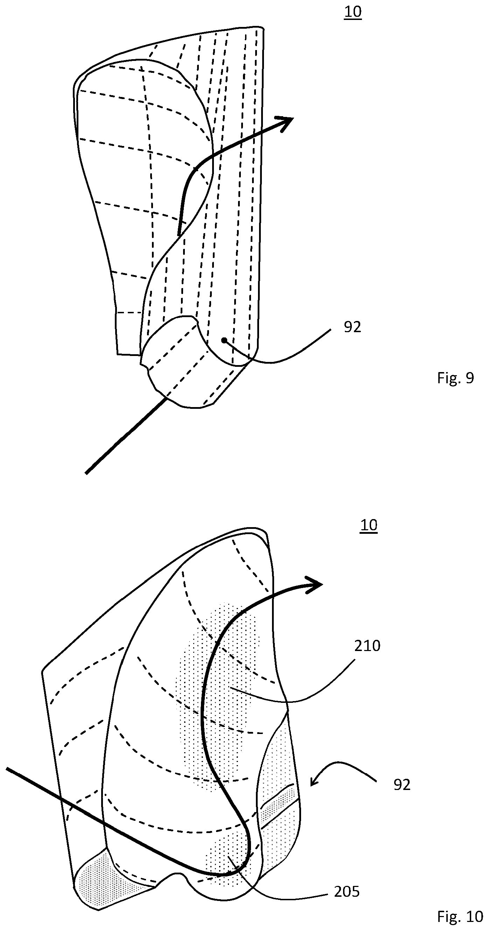

Die Figuren 9 und 10 zeigen eine zweite Ausführungsform einer erfindungsgemässen Umlenkung 10 in verschiedenen Ansichten. Das Element 92 mit seiner halbrunden Kontur bezeichnet die Region, die im verbauten Zustand in die Kugelrinne der Gewindespindel eingreift. Der durchgezogene Pfeil deutet den Weg einer Kugel beim Ausheben an. In Figur 10 sind zusätzlich die Ausheberegion 205 und die Umlenkfläche 210 angedeutet.

Figur 11 ist eine Hilfszeichnung, welche beispielhaft zwei Varianten 22, 22' einer konkav gewölbten, linienförmigen Vertiefung im Querschnitt zeigt, als die die Rinne beschrieben ist Die seitlich hochgezogenen Flächen sind nicht ringförmig oder bogenförmig geschlossen; sie bilden ein offenen Kanal. Diese Öffnung lässt sich charakterisieren anhand des messbaren Öffnungswinkels φ bezogen auf eine übliche Lage einer Kugel 24 im Kanal, senkrecht zur Bewegungsrichtung (hier: senkrecht in oder aus der Abbildungsebene), ausgehend vom Mittelpunkt der Kugel. Mit "übliche Lage" sind dabei alle betriebsüblich vorgesehenen Positionen der Kugel in der Rinne gemeint. Der freie Öffnungswinkel wird mindestens 30°, bevorzugt 90° oder mehr aufweisen. Die beiden Varianten 22, 22' belegen, dass auch mit unterschiedlichen Kurvaturen / Rinnenquerschnitten der Winkel φ zur Charakterisierung verwendbar ist.

Die Figuren 12 und 13 zeigen eine dritte Ausführungsform einer erfindungsgemässen Umlenkung 10 in zwei verschiedenen Ansichten. Hier lassen sich Lageelement 100 und Auslenkungselement 200 grob anhand einer horizontalen Linie aufteilen. Figur 10 zeigt wiederum schraffiert die Ausheberegion 205 und die Umlenkregion 210.

Bei allen drei Ausführungsbeispielen lassen sich somit die erfinderischen Merkmale trotz weitgehend unterschiedlicher Auslegung der Umlenkung identifizieren.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein.

## Patentansprüche

1. Kugelrückführung (1, 1') eines Kugelgewindetriebes (2), der einen Umlenkkanal (3) und zwei baugleiche Umlenkungen (10) zum Ein- bzw. Ausheben von Kugeln aus einem Kugelkanal (4) zwischen der Spindelmutter (5) und der Gewindespindel (6) des Kugelgewindetriebes (2) umfasst, wobei die Umlenkungen (10) je einstückig ausgeführt sind und von aussen in die Mantelfläche (7) der Spindelmutter (5) einsetzbar und radial in die Mantelfläche versenkbar sind, . und jede Umlenkung (10) mindestens zwei Funktionsbereiche bzw. -elemente umfasst:
i. ein Lageelement (100), welches ausgelegt ist die Einbauposition der Umlenkung zu definieren,
ii. ein Auslenkungselement (200) mit einer schaufelförmigen Ausheberegion (205) und einer Umlenkfläche (210) für die Kugeln aus bzw. in einen Kugelkanal
**dadurch gekennzeichnet, dass** alle für die Führung von Kugeln vorgesehenen Flächen der Umlenkung als nicht tunnelförmig geschlossene Rinnen ausgelegt sind.

2. Kugelrückführung nach Anspruch 1, **dadurch gekennzeichnet, dass** das Lageelement (100) eine im Wesentlichen zylindrische oder ovale Grundform aufweist, deren Höhe geringer ist als die Mantelstärke der Spindelmutter am Einbauort.

3. Kugelrückführung nach Anspruch 1-2, **dadurch gekennzeichnet, dass** das Lageelement (100) fliessend in das Auslenkungselement (200) übergeht.

4. Kugelrückführung nach Anspruch 1-3, **dadurch gekennzeichnet, dass** die Umlenkung (10) als Spritzgiesswerkstück aus Kunststoff geformt ist.

5. Kugelrückführung nach Anspruch 1-4, **dadurch gekennzeichnet, dass** die Umlenkung (10) so ausgelegt ist, dass sie unverändert sowohl als Element zum Einleiten wie zum Ausheben von Kugeln aus einem Kugelkanal (4) verwendbar ist.

6. Kugelrückführung nach Anspruch 1-5, **dadurch gekennzeichnet, dass** die nicht tunnelförmig geschlossene Rinne einen freien Öffnungswinkel φ mindestens 30°, bevorzugt mindestens 90° aufweist, gemessen von den Rinnenrändern zur betriebsüblichen Lage einer Kugel im Kanal, orientiert senkrecht zu ihrer Bewegungsrichtung.

7. Kugelrückführung nach Anspruch 1-6, **dadurch gekennzeichnet, dass** jede der Umlenkungen (10) so ausgelegt ist, dass sie ausschliesslich radial in die Mantelfläche versenkbar ist.

8. Kugelrückführung nach Anspruch 1-7, **dadurch gekennzeichnet, dass** der Umlenkkanal (3) als ein in die Mantelfläche (7) der Spindelmutter (5) eingesenkter Trog oder Graben ausgeführt ist.

9. Kugelrückführung nach Anspruch 1-8, **dadurch gekennzeichnet, dass** der Umlenkkanal (3) sowie die Auslenkung(en) (10) bei der Montage durch eine die Spindelmutter bündig umschliessende Hülse verschliessbar sind.

10. Kugelrückführung nach Anspruch 1-9, **dadurch gekennzeichnet, dass** der Umlenkkanal (3) als ein auf die Mantelfläche (7) der Spindelmutter (5) aufbauendes oder aufgesetztes, separates Bauteil ausgeführt ist.

11. Verfahren zur Montage einer Kugelrückführung (1) nach Anspruch 1-10 eines Kugelgewindetriebes (2), mit folgenden Schritten:
- Bereitstellen von zwei einstückigen, baugleichen Umlenkungen (10);
- Bereitstellen einer vorassemblierten Baugruppe aus mindestens einer Spindelmutter (5) und einer Gewindespindel (6), wobei die Spindelmutter (5) zwei radial nach innen angelegte Durchbrüche aufweist, deren Kontur so ausgeführt ist, dass sie die Umlenkungen aufnehmen kann und einen ferner einen die Durchbrüche verbindenden Kugelkanal (4);
- Einsetzen der Umlenkungen (10) in die Durchbrüche;
- Einbringen einer Mehrzahl von Kugeln in den Kugelgewindetrieb über den Kugelkanal (4) bzw. eine der Umlenkungen;
- Sichern der Kugelrückführung (1) durch Anbringen einer Abdeckhülse auf der Spindelmutter (5)

## Claims

1. Ball return (1, 1') of a ball screw drive (2), which comprises a deflection channel (3) and two identically constructed deflectors (10) for lifting balls in or out of a ball channel (4) between the spindle nut (5) and the threaded spindle (6) of the ball screw drive (2), wherein the deflectors (10) are each of integral design and are insertable from the outside into the lateral surface (7) of the spindle nut (5) and are radially retractable into the lateral surface, and each deflector (10) comprises at least two functional regions or elements:
i. a positioning element (100) which is designed to define the installation position of the deflector,
ii. a deflection element (200) having a blade-shaped lift-out region (205) and a deflection surface (210) for the balls from or into a ball channel,
**characterized in that** all surfaces of the deflector provided for guiding balls are designed as non-tunnel-shaped closed grooves.

2. Ball return according to claim 1, **characterized in that** the positioning element (100) has a substantially cylindrical or oval basic shape, the height of which is less than the shell thickness of the spindle nut at the installation location.

3. Ball return according to claim 1-2, **characterized in that** the positioning element (100) merges smoothly into the deflection element (200).

4. Ball return according to claim 1-3, **characterized in that** the deflector (10) is molded as an injection-molded plastic workpiece.

5. Ball return according to claim 1-4, **characterized in that** the deflector (10) is designed to be usable unchanged both as an element for introducing balls into and for lifting balls out of a ball channel (4).

6. Ball return according to claim 1-5, **characterized in that** the non-tunnel-shaped closed groove has a free opening angle Φ of at least 30°, preferably at least 90°, measured from the groove edges to the usual operational position of a ball in the channel, oriented perpendicularly to its direction of movement.

7. Ball return according to claim 1-6, **characterized in that** each of the deflectors (10) is designed to be exclusively radially retractable into the lateral surface.

8. Ball return according to claim 1-7, **characterized in that** the deflection channel (3) is designed as a trough or trench sunk into the lateral surface (7) of the spindle nut (5).

9. Ball return according to claim 1-8, **characterized in that** the deflection channel (3) as well as the deflector(s) (10) can be closed during assembly by a sleeve surrounding the spindle nut in a flush manner.

10. Ball return according to claim 1-9, **characterized in that** the deflection channel (3) is designed as a separate component which is built on or placed on the lateral surface (7) of the spindle nut (5).

11. Method of assembling a ball return (1) according to claim 1-10 of a ball screw drive (2), comprising the following steps:
- providing two integral deflectors (10) of identical construction;
- providing a pre-assembled assembly of at least one spindle nut (5) and a threaded spindle (6), wherein the spindle nut (5) has two radially inwardly arranged apertures, the contour of which is designed such that it can accommodate the deflectors and further a ball channel (4) connecting the apertures;
- inserting the deflectors (10) into the openings;
- inserting a plurality of balls into the ball screw drive via the ball channel (4) or one of the deflectors;
- securing the ball return (1) by fitting a cover sleeve on the spindle nut (5).

## Revendications

1. Système de recirculation de billes (1, 1') d'une vis d'entraînement à billes (2), qui comprend un conduit de renvoi (3) et deux renvois de même conception (10) pour le levage et relevage des billes d'un conduit de billes (4) entre l'écrou de broche (5) et la tige filetée (6) de la vis d'entraînement à billes (2), sachant que les renvois (10) sont respectivement exécutés en une seule pièce et peuvent être introduits de l'extérieur dans la surface d'enveloppe (7) de l'écrou de broche (5) et descendus radialement dans la surface d'enveloppe et chaque renvoi (10) comprend au moins deux zones ou éléments fonctionnels :
i) un élément de positionnement (100), lequel est conçu pour définir la position de montage du renvoi,
ii) un élément de déviation (200) avec une zone de relevage en forme de godet (205) et une surface de renvoi (210) pour les billes depuis ou dans un conduit de billes,
**caractérisé en ce que** toutes les surfaces du renvoi prévues pour le guidage des billes sont conçues comme des rainures non fermées en forme de tunnel.

2. Système de recirculation de billes selon la revendication 1, **caractérisé en ce que** l'élément de positionnement (100) comporte une forme de base pour l'essentiel cylindrique ou ovale dont la hauteur est plus faible que l'épaisseur d'enveloppe de l'écrou de broche à l'emplacement de montage.

3. Système de recirculation de billes selon les revendications 1-2, **caractérisé en ce que** l'élément de positionnement (100) passe de façon fluide dans l'élément de déviation (200).

4. Système de recirculation de billes selon les revendications 1-3, **caractérisé en ce que** le renvoi (10) est moulé en matière plastique sous la forme d'une pièce moulée par injection.

5. Système de recirculation de billes selon les revendications 1-4, **caractérisé en ce que** le renvoi (10) est conçu de sorte qu'il peut être utilisé inchangé comme élément destiné tant à l'introduction qu'au relevage des billes d'un conduit à billes (4).

6. Système de recirculation de billes selon les revendications 1-5, **caractérisé en ce que** la rainure non fermée en forme de tunnel comporte un angle d'ouverture φ libre d'au moins 30°, de préférence d'au moins 90°, mesuré des bords de rainure à la position habituelle de fonctionnement d'une bille dans le conduit, orienté perpendiculairement à sa direction de déplacement.

7. Système de recirculation de billes selon les revendications 1-6, **caractérisé en ce que** chacun des renvois (10) est conçu de telle sorte qu'il ne peut être descendu que radialement dans la surface d'enveloppe.

8. Système de recirculation de billes selon les revendications 1-7, **caractérisé en ce que** le conduit de renvoi (3) est exécuté comme un creux ou cavité chambré dans la surface d'enveloppe (7) de l'écrou de broche (5) .

9. Système de recirculation de billes selon les revendications 1-8, **caractérisé en ce que** le conduit de renvoi (3) et la/les déviation(s) (10) peuvent être fermés lors du montage par un manchon entourant à fleur l'écrou de broche.

10. Système de recirculation de billes selon les revendications 1-9, **caractérisé en ce que** le conduit de renvoi (3) est exécuté comme un composant séparé, agencé ou posé sur la surface d'enveloppe (7) de l'écrou de broche (5).

11. Procédé de montage d'une système de recirculation de billes (1) selon les revendications 1-10 d'une vis d'entraînement à billes (2) avec les étapes suivantes de :
- préparation de deux renvois monoblocs, de conception identique (10),
- préparation d'un module préassemblé composé d'au moins un écrou de broche (5) et d'une tige filetée (6), sachant que l'écrou de broche (5) comporte des passages disposés radialement vers l'intérieur, dont le contour est exécuté de telle manière qu'il peut loger les renvois et un conduit à billes (4) reliant en plus un des passages,
- insertion des renvois (10) dans les passages,
- mise en place d'une pluralité de billes dans la vis d'entraînement à billes par le conduit à billes (4) ou un des renvois,
- fixation du système de recirculation de billes (1) par mise en place d'un manchon de couverture sur l'écrou de broche (5).
